# EUROPEAN PATENT APPLICATION

(11) **EP 2 574 755 A2**
(43) Date of publication of application: **03.04.2013**
(21) Application number: 12185989.6
(22) Date of filing: 25.09.2012
(51) Int. Cl.: F02C 1/05, F02C 6/18

(54) **System and method for generating electric power**

(30) Priority: 29.09.2011 US 201113248717
(71) Applicant: General Electric Company, Schenectady, NY 12345 (US)
(72) Inventor: Frey, Thomas Johannes, Niskayuna, NY New York 12309 (US); Ast, Gabor, 80801 Munchen (DE); Belloni, Clarissa Sara Katharina, Oxford, Oxfordshire OX1 3UH (GB); Finkenrath, Matthias, 92200 Hauts-de-Seine (FR)
(74) Representative: Cleary, Fidelma

(57) **Abstract**

A system includes a gas turbine system (12), a thermal energy storage device (14), and a heat recovery system (16). The gas turbine system (12) is powered by solar energy to generate a first amount of electric power. The thermal energy storage device (14) is coupled to the gas turbine system (12). The thermal energy storage device (14) is configured to selectively receive expanded exhaust gas (23) from the gas turbine system (12) and store heat (25) of the expanded exhaust gas. The heat recovery system (16) is coupled to the gas turbine system (12) and the thermal energy storage device (14). The heat recovery system is selectively powered by at least one of the gas turbine system (12) and the thermal energy storage device (14) to generate a second amount of electric power.

## Description

### BACKGROUND

The invention relates generally to power generation systems, and more specifically to a solar powered combined cycle system having an integrated thermal storage device.

In electric power generation, a combined cycle is an assembly of heat engines that work in tandem off the same source of heat, converting heat into mechanical energy to drive electrical generators. The exhaust of one heat engine is used as the heat source for another heat engine, thus extracting more useful energy from the heat, increasing the system's overall efficiency.

Heat engines only use a portion of the energy generated by the combustion of fuel. The remaining heat from combustion is generally wasted. Combining two or more thermodynamic cycles results in improved overall efficiency, and reduced fuel costs. A combined cycle power plant generates electricity and heat in the exhaust is used to drive a turbine to generate additional electricity and enhance the efficiency of the power plant.

In certain applications, concentrated solar tower plants are attractive from a cost/performance ratio, because of the high achievable temperatures, which enable the use of solar-fired gas turbines. Such a solar powered gas turbine system is built as a combined cycle where the exhaust from the gas turbine is used to power an additional bottoming cycle. However, a solar powered combined cycle power plant has a lower plant capacity factor due to the intermittency of the available solar radiation. In some applications, a hybrid system is used to operate the gas turbine using fossil fuel when sunlight is not available. Such systems have drawbacks associated with carbon dioxide emissions.

There is a need for an improved system for generating electric power.

### BRIEF DESCRIPTION

In accordance with one aspect of the present invention, a system includes a gas turbine system, a thermal energy storage device, and a heat recovery system. The gas turbine system is powered by solar energy to generate a first amount of electric power. The thermal energy storage device is coupled to the gas turbine system. The thermal energy storage device is configured to selectively receive expanded exhaust gas from the gas turbine system and store heat of the expanded exhaust gas. The heat recovery system is coupled to the gas turbine system and the thermal energy storage device. The heat recovery system is selectively powered by at least one of the gas turbine system and the thermal energy storage device to generate a second amount of electric power.

In accordance with another aspect of the present invention, a method includes powering a gas turbine system using solar energy to generate a first amount of electric power. The method further includes electively directing expanded exhaust gas from the gas turbine system to a thermal energy storage device so as to store heat of the expanded exhaust gas in the thermal energy storage device. The method also includes selectively powering a heat recovery system via at least one of the gas turbine system and the thermal energy storage device to generate a second amount of electric power.

### DRAWINGS

Embodiments of the present invention will now be described, by way of example only, with reference to the accompanying drawings in which:
FIG. 1 is a block diagram of a combined cycle system for generating power in accordance with an exemplary embodiment of the present invention; and
FIG. 2 is a block diagram of a combined cycle system for generating power in accordance with another exemplary embodiment of the present invention.

### DETAILED DESCRIPTION

As discussed in detail below, embodiments of the present invention disclose a system including a solar powered gas turbine system combined with a thermal energy storage device and a heat recovery system. The thermal energy storage device is configured to selectively receive expanded exhaust gas from the gas turbine system and store heat of the expanded exhaust gas. The heat recovery system is selectively powered by at least one of the gas turbine system and the thermal energy storage device to generate an electric power. Low temperature exhaust heat from a solar powered gas turbine is either stored in the thermal energy storage device or used directly to power the waste heat recovery system. When the gas turbine system is not in operation, the heat from the thermal energy storage device is used to power the waste heat recovery system. The system allows flexible operation depending on solar heat availability and the thermal energy storage capability.

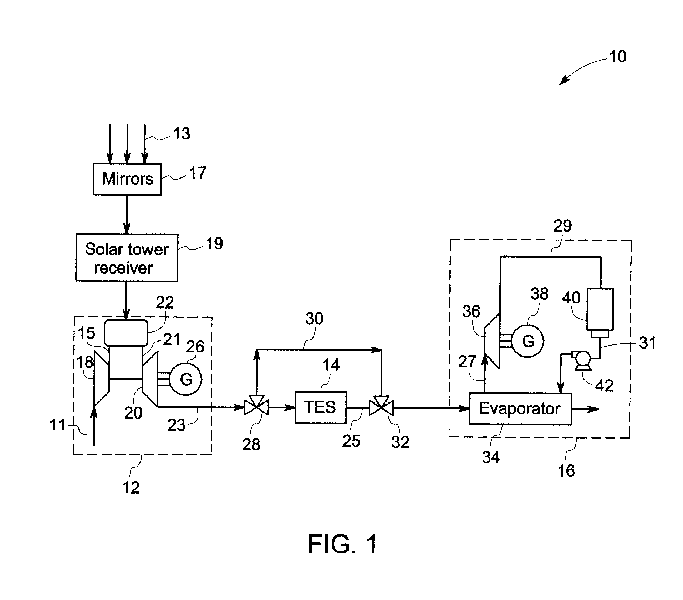

Referring to FIG. 1, a combined cycle system 10 for generating electric power is illustrated in accordance with an exemplary embodiment of the present invention. The system 10 includes a gas turbine system 12, a thermal energy storage device 14, and a heat recovery system 16. The gas turbine system 12 includes a compressor 18, a turbine 20, and a combustor 22 disposed between the compressor 18 and the turbine 20. Air 11 is compressed via the compressor 18 and fed to the combustor 22. Concentrated solar radiation 13 is used to heat the pressurized air 15 in the combustor 22. In such an embodiment, solar radiation 13 is directed via a plurality of solar mirrors 17 and a solar tower receiver 19 to the combustor 22. In some embodiments, the pressurized air 15 is heated up to a temperature in the range of about 700 to about 1000 degrees Celsius. A hot gas stream 21 from the combustor 22 is expanded via the turbine 20. The temperature and pressure of the gas stream 21 is reduced in the turbine 20. In some embodiments, the temperature of the gas stream at an exit of the turbine 20 is in the range of about 400 to about 500 degrees Celsius. The turbine 20 is coupled to a generator 26 and configured to generate a first amount of electric power.

In the illustrated embodiment, the thermal energy storage device 14 is coupled to the turbine 20 via a first control device 28. The thermal energy storage device 14 is configured to selectively receive an expanded exhaust gas 23 from the turbine 20 and store heat of the expanded exhaust gas 23. The thermal energy storage is defined as the temporary storage of thermal energy at high or low temperatures. Energy storage reduces the time or rate mismatch between energy supply and energy demand and is important for energy conservation. The first control device 28 is configured to the control flow of the expanded exhaust gas 23 from the turbine 20 to the thermal energy storage device 14. In the illustrated embodiment, the first control device 28 is a first control three-way valve. In one embodiment, the thermal energy storage device 14 includes a latent heat storage device. In the latent heat storage device, thermal energy is stored as a change of phase of the storage medium (usually between solid and liquid states). The amount of energy stored in the latent heat storage device depends on the mass and latent heat of fusion of the storage material. In another embodiment, the thermal energy storage device 14 includes a sensible heat storage device. In the sensible heat storage device, thermal energy is stored as a temperature change in the storage medium used. The amount of energy stored in the sensible heat storage device depends on the temperature change of the storage material. The terms "sensible heat" and "latent heat" characterize the same form of energy, *i*. *e*. heat in terms of their effect on a material or a thermodynamic system.

The system 10 further includes a by-pass path 30 extending from the first control device 28 to a second control device 32 disposed between thermal energy storage device 14 and the heat recovery system 16. The by-pass path 30 is configured to allow flow of the expanded exhaust gas 23 from the turbine 20 to the heat recovery system 16 bypassing the thermal energy storage device 14. The second control device 32 is configured to control at least one of the flow of heat 25 from the thermal energy storage device 14, and the expanded exhaust gas 23 from the turbine 20 to the heat recovery system 16. In the illustrated embodiment, the second control device 32 includes a second control three-way valve.

In one embodiment, when the gas turbine 12 is operated, the expanded exhaust gas 23 is fed from the turbine 20 to the thermal energy storage device 14 via the first control device 28 to charge the thermal energy storage device 14. In another embodiment, when the gas turbine 12 is operated, the expanded exhaust gas 23 from the turbine 20 is fed via the first control device 28, the by-pass path 30, and the second control device 32 to the heat recovery system 16. In another embodiment, when the gas turbine 12 is not operated, stored thermal energy 25 is fed via the second control device 32 to the heat recovery system 16. In one embodiment, when the gas turbine 12 is not operated, stored thermal energy 25 is fed via the second control device 32 and an intermediate loop, for example, an oil loop to the heat recovery system 16. In another embodiment, the thermal energy storage device 14 is integrated with the heat recovery system 16, so as to enable thermal energy 25 to be transferred to the heat recovery system 16 when the gas turbine 12 is not operated.

In the illustrated embodiment, the heat recovery system 16 is a rankine cycle system, for example, an organic rankine cycle system. An organic working fluid may be circulated through the rankine cycle system 16. The organic working fluid may include cyclohexane, cyclopentane, thiophene, ketones, aromatics, or combinations thereof. The rankine cycle system 16 includes an evaporator 34 coupled to the second control device 32. In one embodiment, the evaporator 34 receives heat from the thermal energy 25 stored in the thermal energy storage device 14 and generates an organic working fluid vapor 27. In another embodiment, the evaporator 34 receives heat from the expanded exhaust gas 23 fed from the turbine 20 via the first control device 28, the bypass path 30, and the second control device 32 and generates the organic working fluid vapor 27. The organic working fluid vapor 27 is passed through an expander 36 (which in one example comprises a radial type expander) to drive a generator 38 configured to generate a second amount of electric power. In certain other exemplary embodiments, the expander 36 may be axial type expander, impulse type expander, or high temperature screw type expander. After passing through the expander 36, expanded organic working fluid vapor 29 at a relatively lower pressure and lower temperature is passed through a condenser 40. The organic working fluid vapor 29 is condensed into a liquid 31, which is then pumped via a pump 42 to the evaporator 34. The cycle may then be repeated.

In accordance with the illustrated exemplary embodiment of the present invention, during the day the gas turbine system 12 is powered by concentrated sunlight 13. Concentrated sunlight 13 is used instead of fuel in the combustor 22 of the gas turbine system 12. The heat of the exhaust gas 23 from the turbine 20 is stored in the thermal energy storage device 14, or directly used to power the heat recovery system 16, or combinations thereof. The heat of the exhaust gas 23 from the turbine 20 can be flexibly used to charge the thermal storage device 14 and power the heat recovery system 16 in parallel depending on solar heat availability or additional power demand during peak energy requirements. During night, when enough solar heat is not available for powering the gas turbine system 12, the heat 25 stored in the thermal energy storage device 14 is used to power the heat recovery system 16. Hence the system 10 can be operated flexibly depending on the solar heat availability or the power demand. The capacity factor of the system 10 is increased due to the thermal energy storage capability of the thermal energy storage device 14. It should be noted herein that the thermal energy storage device 14 is used to store heat of the exhaust gas 23 fed from the turbine 20 rather than directly from the concentrated sunlight 13. In such a system, heat storage is much easier compared to storing heat directly from the concentrated sunlight 13, since the temperature of the exhaust gas 23 from the turbine 20 is relatively less, for example at a temperature in the range of about 400 to about 500 degrees Celsius.

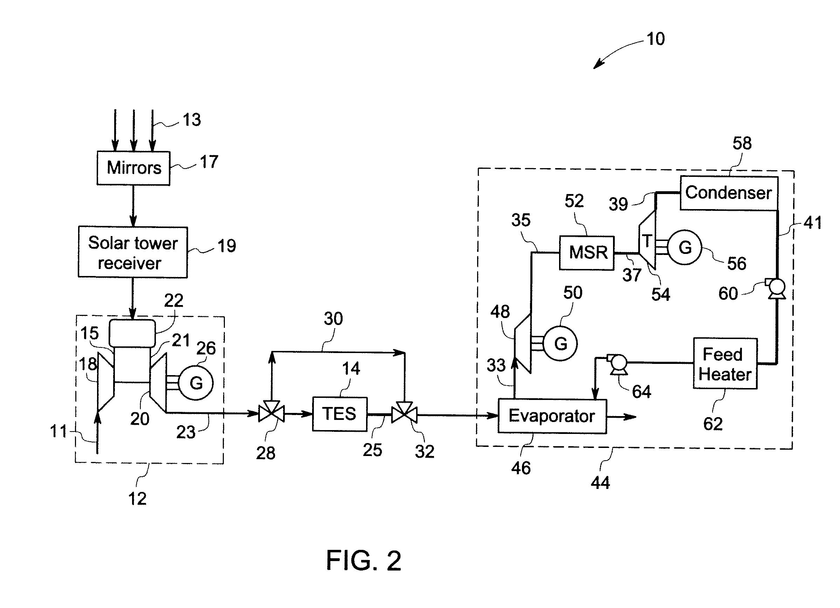

Referring to FIG. 2, a combined cycle system 10 for generating electric power is illustrated in accordance with another exemplary embodiment of the present invention. The system 10 includes a gas turbine system 12, a thermal energy storage device 14, and a heat recovery system 44. In one embodiment, the expanded exhaust gas 23 is fed from the turbine 20 to the thermal energy storage device 14 via the first control device 28 to charge the thermal energy storage device 14. In another embodiment, the expanded exhaust gas 23 from the turbine 20 is fed via the first control device 28, the by-pass path 30, and the second control device 32 to the heat recovery system 44. In another embodiment, stored thermal energy 25 is fed via the second control device 32 to the heat recovery system 44.

In the illustrated embodiment, the heat recovery system 44 is a steam cycle system. It should be noted herein that the illustrated steam cycle system 44 is an exemplary embodiment and may vary depending on the application. The steam cycle system 44 includes an evaporator 46 coupled to the second control device 32. In one embodiment, the evaporator 46 receives heat from the thermal energy 25 stored in the thermal energy storage device 14 and generates steam 33. In another embodiment, the evaporator 46 receives heat from the expanded exhaust gas 23 fed from the turbine 20 via the first control device 28, the bypass path 30, and the second control device 32 and generates steam 33.

Saturated steam 33 from the evaporator 46 is expanded via a high-pressure turbine 48. The high-pressure turbine 48 is coupled to a generator 50 configured to generate electric power. Moist steam 35 from the high-pressure turbine 48 is dried and superheated in a moisture separator reheater 52. Saturated or superheated steam 37 fed from the moisture separator reheater 52 is expanded in a low-pressure turbine 54. The low-pressure turbine 54 is coupled to a generator 56 configured to generate electric power. Exhaust steam 39 from the low-pressure turbine 54 is condensed via a condenser 58 in which heat is transferred to a cooling medium under a constant vacuum condition. Feed water 41 from the condenser 58 is fed via a pump 60 to a preheater 62 to heat the feed water 41. The feed water from the preheater 62 is fed to the evaporator 46 via a pump 64 (optional) to vaporize the feed water at a constant pressure condition. The cycle is repeated.

With reference to FIGS. 1 and 2, the heat recovery system may include a rankine cycle system 16 or a steam cycle system 44, or combinations thereof based on the temperature of the exhaust gas from the turbine 20 or the type of thermal energy storage device 14. During a peak power requirement time, both the gas turbine system 12 and the heat recovery systems 16, 44 may be powered to generate maximum power. The thermal energy storage device 14 can be charged flexibly when enough solar radiation is available and the power demand is minimum. Higher cycle temperature can be attained in the system 10 since the gas turbine system 12 is powered using concentrated solar radiation. The system 10 enable high overall cycle efficiency due to the high temperature in the combustor 22 of the gas turbine system 12, reduction in gas temperature due to expansion in the turbine 20, low temperature heat in the thermal storage device 14, and use of an efficient waste heat recovery system 16.

As discussed herein, a system includes a gas turbine system, a thermal energy storage device, and a heat recovery system. The gas turbine system is powered by solar energy to generate a first amount of electric power. The thermal energy storage device is coupled to the gas turbine system and configured to selectively receive expanded exhaust gas from the gas turbine system and store heat of the expanded exhaust gas. The heat recovery system is coupled to the gas turbine system and the thermal energy storage device. The heat recovery system is selectively powered by at least one of the gas turbine system and the thermal energy storage device to generate a second amount of electric power.

In accordance with another exemplary embodiment, a method includes powering a gas turbine system using solar energy to generate a first amount of electric power. The method further includes selectively directing expanded exhaust gas from the gas turbine system to a thermal energy storage device so as to store heat of the expanded exhaust gas in the thermal energy storage device. The method also includes selectively powering a heat recovery system via at least one of the gas turbine system and the thermal energy storage device to generate a second amount of electric power.

In accordance with another exemplary embodiment, a system includes a gas turbine system and a thermal energy storage device. The gas turbine system is powered by solar energy to generate a first amount of electric power. The thermal energy storage device is coupled to the gas turbine system. The thermal energy storage device is configured to selectively receive expanded exhaust gas from the gas turbine system and store heat of the expanded exhaust gas. The gas turbine system and the thermal energy storage device are configured to be coupled to a heat recovery system. At least one of the gas turbine system and the thermal energy storage device is configured to selectively power the heat recovery system to generate a second amount of electric power.

In accordance with another exemplary embodiment, a system includes a thermal energy storage device and a heat recovery system. The heat recovery system is coupled to the thermal energy storage device. The thermal energy storage device and the heat recovery system are configured to be coupled to a gas turbine system powered by solar energy to generate a first amount of electric power. The thermal energy storage device is configured to selectively receive expanded exhaust gas from the gas turbine system and store heat of the expanded exhaust gas. The heat recovery system is selectively powered by at least one of the gas turbine system and the thermal energy storage device to generate a second amount of electric power.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A system, comprising:
   a gas turbine system powered by solar energy to generate a first amount of electric power; and
   a thermal energy storage device coupled to the gas turbine system, wherein the thermal energy storage device is configured to selectively receive expanded exhaust gas from the gas turbine system and store heat of the expanded exhaust gas;
   wherein the gas turbine system and the thermal energy storage device are configured to be coupled to a heat recovery system, wherein at least one of the gas turbine system and the thermal energy storage device is configured to selectively power the heat recovery system to generate a second amount of electric power.
2. A system comprising:
   a thermal energy storage device;
   a heat recovery system coupled to the thermal energy storage device,
      wherein the thermal energy storage device and the heat recovery system are configured to be coupled to a gas turbine system powered by solar energy to generate a first amount of electric power; wherein the thermal energy storage device is configured to selectively receive expanded exhaust gas from the gas turbine system and store heat of the expanded exhaust gas; wherein the heat recovery system is selectively powered by at least one of the gas turbine system and the thermal energy storage device to generate a second amount of electric power.

## Claims

1. A system, comprising:
a gas turbine system (21) powered by solar energy to generate a first amount of electric power;
a thermal energy storage device (14) coupled to the gas turbine system (12), wherein the thermal energy storage device (14) is configured to selectively receive expanded exhaust gas (23) from the gas turbine system (12) and store heat (25) of the expanded exhaust gas (23); and
a heat recovery system (16) coupled to the gas turbine system (12) and the thermal energy storage device (14), wherein the heat recovery system (16) is selectively powered by at least one of the gas turbine system (12) and the thermal energy storage device (14) to generate a second amount of electric power.

2. The system of claim 1, wherein the thermal energy storage device (14) comprises one of a latent heat storage device or a sensible heat storage device.

3. The system of claim 1 or 2, wherein the heat recovery system (16,44) comprises one of an organic rankine cycle system or a steam cycle system.

4. The system of any of claims 1 to 3, further comprising a first control device (28) disposed between the gas turbine system (12) and the thermal energy storage device (14) and configured to the control flow of the expanded exhaust gas (23) from the gas turbine system (12) to the thermal energy storage device (14).

5. The system of claim 4, wherein the first control device (28) comprises a first control three-way valve.

6. The system of claim 4 or 5, further comprising a second control device (32) disposed between thermal energy storage device (14) and the heat recovery system (16) and configured to control at least one of the flow of heat from the thermal energy storage device (14) and the expanded exhaust gas (23) from the gas turbine system (12) to the heat recovery system (16).

7. The system of claim 6, wherein the second control device (32) comprises a second control three-way valve.

8. The system of claim 6 or 7, further comprising a by-pass path (30) extending from the first control device (28) to the second control device (32) and by-passing the thermal energy storage device (14) for flow of the expanded exhaust gas (23) from the gas turbine system (12) to the heat recovery system (14).

9. A method, comprising:
powering a gas turbine system (12) using solar energy to generate a first amount of electric power;
selectively directing expanded exhaust gas (23) from the gas turbine system (12) to a thermal energy storage device (14) so as to store heat (25) of the expanded exhaust gas (23) in the thermal energy storage device (14); and
selectively powering a heat recovery system (16,44) via at least one of the gas turbine system (12) and the thermal energy storage device (14) to generate a second amount of electric power.

10. The method of claim 9, comprising directing the expanded exhaust gas (23) from the gas turbine system (12) to the thermal energy storage device (14) with one of a latent heat storage device or a sensible heat storage device.

11. The method of claim 9 or 10, comprising selectively powering the heat recovery system (16,44) with one of an organic rankine cycle system or a steam cycle system.

12. The method of any of claims 9 to 11, comprising controlling flow of the expanded exhaust gas (23) from the gas turbine system (12) to the thermal energy storage device (14) via a first control device (28) disposed between the gas turbine system (12) and the thermal energy storage device (14).

13. The method of claim 12, comprising controlling at least one of the flow of heat (25) from the thermal energy storage device (16), the expanded exhaust gas (23) from the gas turbine system (12) to the heat recovery system (14) via a second control device (32) disposed between thermal energy storage device (14) and the heat recovery system (16,44).

14. The method of claim 13, comprising directing the flow of the expanded exhaust gas (23) from the gas turbine system (12) to the heat recovery system (16,44) via a by-pass path (30) extending from the first control device (28) to the second control device (32) and by-passing the thermal energy storage device (14).
